# EUROPÄISCHE PATENTSCHRIFT

(11) **EP 1 094 289 B1**
(45) Veröffentlichungstag und Bekanntmachung des Hinweises auf die Patenterteilung: **09.08.2006**
(21) Anmeldenummer: 00119522.1
(22) Anmeldetag: 07.09.2000
(51) Int. Cl.: F28D 1/04, F04D 29/58, F04D 29/60

(54) **Kühlanlage**
Cooling system
Installation de refroidissement

(30) Priorität: 21.10.1999 DE 19950755
(43) Veröffentlichungstag der Anmeldung: 25.04.2001
(73) Patentinhaber: Modine Manufacturing Company, Racine Wisconsin 53403 (US)
(72) Erfinder: Zobel, Werner, 71052 Böblingen (DE); Ehlers, Michael, 72202 Nagold (DE); Vetter, Frank, 70794 Filderstadt (DE); Soldner, Jörg, 71139 Ehningen (DE)
(74) Vertreter: Wolter, Klaus-Dietrich

(56) Entgegenhaltungen:
- BE-A- 527 701
- DE-A- 19 724 728
- DE-C- 19 713 712
- GB-A- 520 651
- US-A- 3 800 866
- US-A- 4 202 296

## Beschreibung

Die Erfindung betrifft eine Kühlanlage mit mehreren einzelnen Kühlern, die kastenförmig angeordnet sind und die ein Ausblasschaufeln, Deckscheibe und Rückwand aufweisendes Laufrad eines Radialventilators, innerhalb der kastenförmigen Anordnung besitzt, das Frischluft über eine mit einer Düse versehenen Ansaugöffnung in der Frontwand ansaugt und als Kühlluft durch die Kühler der kastenförmigen Anordnung hindurchbläst, wobei die Kühlanlage eine Rückwand aufweist, die das Lager des Radialventilators trägt.

Diese Kühlanlage ist in der EP-A-1045217 (Stand der Technick nach Art. 54(3) und (4) EPÜ) und DE 197 13 712 C1 beschrieben worden.

Weitere Kühlanlagen mit ähnlichen Merkmalen sind aus US 4 202 296 und DE 31 48 942 C2 bekannt. Sie beziehen sich jedoch nicht auf kastenförmige Anordnungen mit mehreren einzelnen Kühlern sondern auf sogenannte Ringkühler, die fertigungstechnisch aufwendiger herstellbar sind und sich deshalb bisher nicht durchsetzen konnten. Der Ringkühler gemäß US dient als Wasserkühler für ein Fahrzeug, wogegen der Ringkühler aus der DE auch als Kondensator für die Klimaanlage des Fahrzeuges eingesetzt werden kann. Wie aus den entsprechenden Seitenansichten dieser beiden Dokumente entnommen werden kann, befindet sich das Laufrad des Radialventilators mit seiner durch die Mitte der Schaufeln gedachten vertikalen Achse etwa auf der vertikalen Mittellinie des Ringkühlers. Diese Position ist hinsichtlich der Effizienz des Laufrades nicht sehr vorteilhaft.

Ein weiterer aus DE-AS- 27 16 997 bekannter Ringkühler ist zur Kühlung mehrerer unterschiedlicher Medien ausgelegt worden, wodurch der fertigungstechnische Aufwand noch weiter ansteigt. Die Position des Laufrades wurde auch dort nicht angesprochen. Radialventilatoren, bei denen das Verhältnis des Durchmessers der Einströmdüse zum Durchmesser des Laufrades etwa zwischen 0,6 und 0,9 liegt, weisen Geräuscharmut und kompakte Gestaltung auf. ("Ventilatoren", 5. Auflage, 1972, S. 151, von Dr.-Ing. Bruno Eck) Radialventilatoren unterliegen selbstverständlich auch noch anderen strömungstechnischen Gesetzmäßigkeiten nach denen sie ausgelegt werden. Zum Beispiel kann einem bestimmten Durchmesser der Einströmdüse eine bestimmte optimale Breite des Laufrades zugeordnet werden. Beim Betrieb von Radialventilatoren stellt sich zwangsläufig eine sogenannte Spaltströmung zwischen der Düse und der Deckscheibe des Radiallaufrades ein, deren Größe von der Ausbildung des Spaltes abhängt. Diese Spaltströmung hat zur Folge, daß sich ein Unterdruckgebiet im Bereich der Deckscheibe ausbildet, wodurch sich eine Strömung von Gebieten höheren Druckes ergibt. Diese Strömung ist dann schädlich, d. h. leistungsmindernd, wenn Luft von außerhalb der Kühlanlage angesaugt wird.

Die Aufgabe der Erfindung besteht darin, die Kühlanlage aus dem Oberbegriff so weiterzubilden, daß die Effizienz der Kühlanlage angehoben wird.

Die erfindungsgemäße Lösung erfolgt mit den Merkmalen des Anspruchs 1.

Es ist vorgesehen, daß die Mittellinie der Ausblasschaufeln des Laufrades mit einem Abstand vor der Mittellinie der Kühlanlage verläuft, wobei das Verhältnis der Abmessung vom Düseneinlauf bis zur Mitte der Ausblasschaufeln, gemessen entlang der Rotationsachse, zum Durchmesser des Laufrades zwischen 0,20 und 0,36 beträgt.

Das Radiallaufrad ist freiausblasend, d. h. es besitzt kein das Laufrad einschließendes Gehäuse, und es hat rückwärts gekrümmte Ausblasschaufeln. Die Verwendung rückwärts gekrümmter Ausblasschaufeln führt dazu, daß sich der innerhalb der kastenförmigen Anordnung vorhandene Raum gleichmäßiger mit Kühlluft anfüllt, bevor diese durch die Kühlerhindurch tritt. Mit anderen Worten, auch weiter von den Ausblasschaufeln entfernt liegende Kühlnetzbereiche der Kühler werden intensiv mit Kühlluft beaufschlagt.

Unterhalb von 0,20 werden die geometrischen Verhältnisse des Laufrades unvorteilhaft, so daß der Wirkungsgrad des freiausblasenden Laufrades deutlich zurückgeht.

Die Rückwand kann einen ebenen Abschluß der Kühlanlage darstellen. Vorzugsweise ist die Rückwand zum Zentrum hin in das Innere der kastenförmigen Kühleranordnung eingezogen und weist Knotenbleche in den Eckbereichen auf, von denen mindestens zwei mindestens je eine Öffnung zum Durchführen eines zu kühlenden Mediums durch mindestens einen Kühler besitzen, die mit Strömungskanälen verbunden sind, an denen sich der Ein-und Austritt für das Medium befindet. Weiterbildungen ergeben sich aus den anderen Unteransprüchen.

Die Erfindung sieht vor, das Laufrad relativ weit vorne anzuordnen. Es wurden zahlreiche Versuche durchgeführt, die zeigen, daß in dem mit Zahlen belegten Verhältnisbereich ein leistungsmäßiges Optimum vorliegt. Die Verluste durch Rückströmung sind in diesem Verhältnisbereich offensichtlich minimiert, wodurch der durch die Kühler geblasene Luftvolumenstrom und damit die Kühlleistung maximiert ist. maximiert ist.

Die eingezogene Rückwand ist an diese Vorne-Position des Laufrades angepaßt, wodurch auch eine sehr kompakte Bauweise möglich wird, denn in dem eingezogenen Raum, der aufgrund der Vorne-Position des Laufrades größer ist als im Stand der Technik, sind Antriebselemente des Radialventilators angeordnet. Besonders gute Ergebnisse wurden mit Kühlanlagen erzielt, bei denen der genannte Bereich zwischen 0,25 und 0,32 liegt.

Die Rückwand ist das tragende Element der Kühlanlage. Sie weist deshalb vom Lager des Laufrades ausgehende Streben zu den Knotenblechen auf, die sich in den Ecken der Kühlanlage befinden. Eine besonders kompakte Ausbildung ergibt sich dadurch, daß in diesen Knotenblechen Öffnungen vorgesehen sind, durch die ein zu kühlendes Medium, beispielsweise die Kühlflüssigkeit eines Lastkraftwagens, in einen Kühler ein-oder austreten kann. Die Öffnungen sind mittels Strömungskanälen verbunden, die sich unmittelbar an der Rückwand befinden. Wenn gewünscht, können die Strömungskanäle einen Teil der Rückwand bilden und damit Stabilitäts-und Dichtfunktionen übernehmen, denn es ist wesentlich, daß die Rückwand (wie auch die Frontwand) zur Vermeidung von Abströmverlusten die Kühlanlage nach außen abdichtet.

Die Rückwand, bestehend aus den Knotenblechen mit Streben und Zentrum, kann beispielsweise ein gießtechnisch hergestelltes Teil sein, was fertigungstechnisch günstig ist. Die zwischen den Streben vorgesehenen Abdeckungen können Einzelteile sein.

Weitere Merkmale und vorteilhafte Wirkungen ergeben sich aus der folgenden Beschreibung der Erfindung anhand von Ausführungsbeispielen. Die beiliegenden Figuren zeigen:
- Fig. 1: ist eine Perspektivansicht auf die Kühlanlage von hinten.
- Fig. 2: ist eine Perspektivansicht auf die Rückwand.
- Fig. 3: ist ein Querschnitt durch die Kühlanlage.
- Fig. 4: zeigt den Verlauf der Rückströmung in Abhängigkeit von der Position des Radiallaufrades.
- Fig. 5: zeigt das freiausblasende Laufrad.

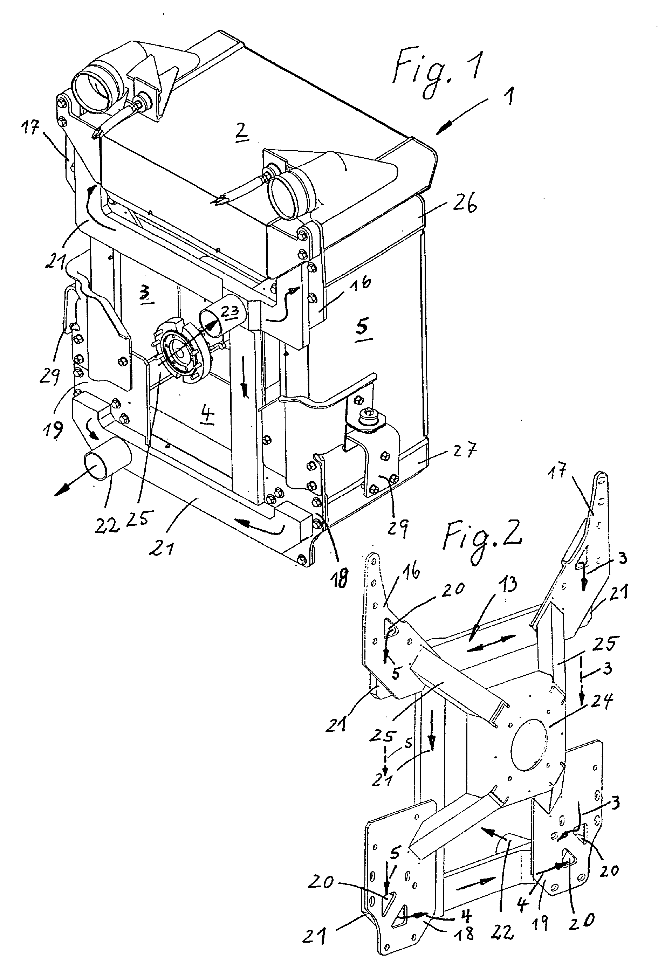

Die Kühlanlage 1 des Ausführungsbeispieles ist für große Lastkraftwagen vorgesehen. Die Fig. 1 zeigt die Kühlanlage 1, bestehend aus einem oberen Ladeluftkühler 2, zwei seitlichen und einem unteren Kühler 3, 4, 5, die in diesen Ausführungsbeispielen alle als Kühlflüssigkeitskühler vorgesehen sind. Die Rückwand 13 wurde in Fig. 1 ohne Abdeckplatten zwischen den Streben 25 gezeichnet, weshalb der Blick in das Innere frei ist. Weil die Kühler 3, 4, 5 alle Kühlflüssigkeitskühler sind, verbinden die Strömungskanäle 21 die drei Kühler 3, 4, 5.

Es versteht sich, daß genausogut lediglich ein Kühlflüssigkeitskühler, ein Kondensator für die Klimaanlage und ein Ölkühler oder dergleichen zur Kühlanlage gehören könnten, so daß für diesen Fall die Strömungskanäle 21 anders als gezeigt anzuordnen wären.

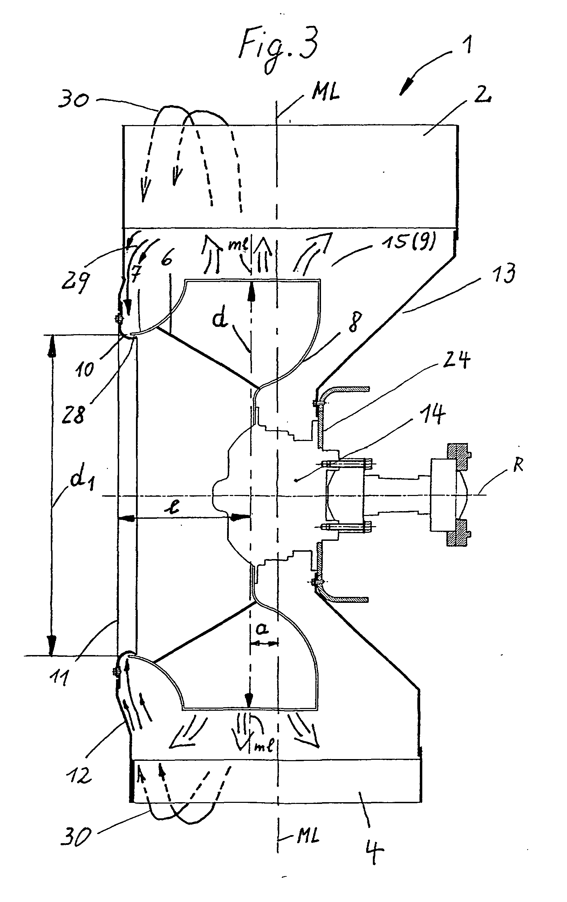

Die Strömungskanäle 21 besitzen einen Eintritt 23 für die Kühlflüssigkeit und einen Austritt 22. Der in Fig. 1 obere Strömungskanal 21 verbindet die Kühlflüssigkeitskühler 3 und 5 und verteilt die zu kühlende Kühlflüssigkeit über die Öffnungen 20 in den Knotenblechen 16 und 17 auf die Kühler 3 und 5 bzw. deren Sammelkästen 26. (Siehe dazu auch Fig. 2, die eine perspektivische Ansicht von vorne auf die Rückwand 13 zeigt, in der Teile der Strömungskanäle 21 in der Ebene hinter der Rückwand 13 zu erkennen sind.) Der untere Strömungskanal 21 korrespondiert über je eine der zwei Öffnungen 20 in den Knotenblechen 18 und 19 mit den Sammelkästen 27 der Kühlflüssigkeitskühler 3, 5 und geht zum Austritt 22. Vom oberen horizontalen Strömungskanal 21 erstreckt sich ein vertikaler Strömungskanal 21, der über die zweite Öffnung 20 im Knotenblech 19 zum nicht gezeigten Sammelkasten des unteren Kühlers 4 führt, um auch den Kühler 4 mit der zu kühlenden Kühlflüssigkeit zu versorgen. In den Fig. 1 und 2 sind Pfeile eingezeichnet worden, die die Verteilung der Kühlflüssigkeit auf die Kühler 3, 4 und 5 verdeutlichen. In Fig. 2 sind die Pfeile mit den Bezugszeichen der zugehörigen Kühler 3, 4 und 5 gekennzeichnet worden.

Die Ausführung der strömungstechnischen Verbindung der Strömungskanäle 21 über die Öffnungen 20 zu den Stirnseiten der Sammelkästen 26 und 27 ist im Detail nicht gezeigt. Der Fachmann hat dafür jedoch genügend Varianten parat und wird, wo erforderlich, auch geeignete Dichtungen anbringen können. Die Öffnungen 20 sind etwa dreieckförmig, weil auch die Sammelkästen 26, 27 etwa dreieckförmigen Querschnitt aufweisen. Das ist in der bereits genannten europäischen Patentanmeldung EP-A-1045217 gezeigt und beschrieben worden.

Die Strömungskanäle 21 sind an der Rückwand 13 befestigt und stellen ein zusätzliches Versteifungselement dar. Außerdem sind beidseitig der Rückwand 13 Halterungen 29 zu Abstützung der Kühlanlage 1 im Lastkraftwagen angebracht worden. In der Mitte der Rückwand 13 befindet sich eine Adapterplatte 24 zur Aufnahme des Lagers 14 des Radialventilators 9.

Aus der Fig. 3 ist zu erkennen, daß die Rückwand 13 eingezogen ist. Das Laufrad des Ventilators 9 befindet sich in einer vorderen Position innerhalb der Kühlanlage, die sich als optimal hinsichtlich der Kühlleistung erwiesen hat. In dieser Position ist die Mitte der Ausblasschaufeln 6 deutlich vor der Mittellinie ML der Kühlanlage 1. In diesem Ausführungsbeispiel beträgt das Verhältnis I/d = 0,30. Das Verhältnis des Durchmessers d1 der Einströmdüse zum Durchmesser d des Laufrades 15 beträgt in diesem Ausführungsbeispiel 0, 70. Es hat sich erwiesen, daß in der Vorne-Position des Laufrades 15 die in Fig. 3 durch Pfeile eingezeichnete Rückströmung 30 sehr gering ist, wodurch der durch die Kühler 2 - 5 gedrückte Volumenstrom maximiert bzw. die Kühlleistung erhöht worden ist. Mit dem Bezugszeichen 29 wurde die im Betrieb des Radialventilators auftretende Spaltströmung durch den Spalt 28 zwischen Düse 10 und Deckscheibe 7 gekennzeichnet.

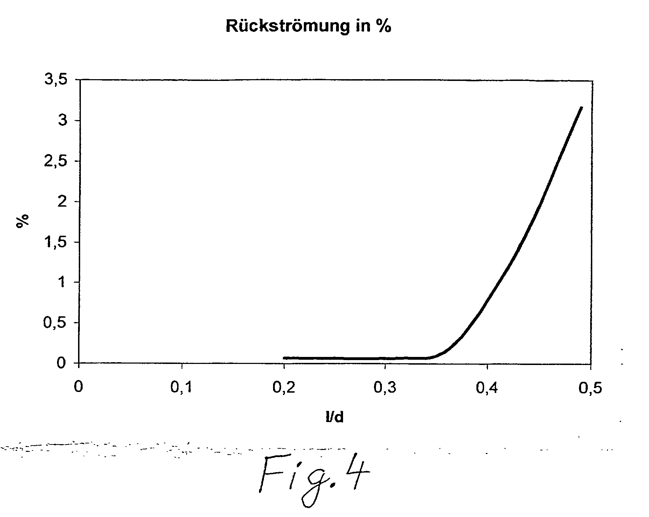

Die Fig. 4 zeigt den prozentualen Anteil der Rückströmung am Gesamtvolumenstrom in Abhängigkeit von der Position des Laufrades in der kastenförmigen Kühlanlage 1. Aus dieser, die Ergebnisse zahlreicher Versuchsreihen widerspiegelnden Darstellung, ist zu erkennen, daß insbesondere im Verhältnisbereich I/d zwischen 0,20 und 0,32 die Rückströmung minimal und auch etwa konstant ist. Erst danach ist ein steiler Anstieg der Kurve festzustellen, wodurch angezeigt wird, daß die Rückströmung ständig größer wird, je größer das Verhältnis I/d wird bzw. je weiter das Laufrad 15 nach hinten verschoben wird.

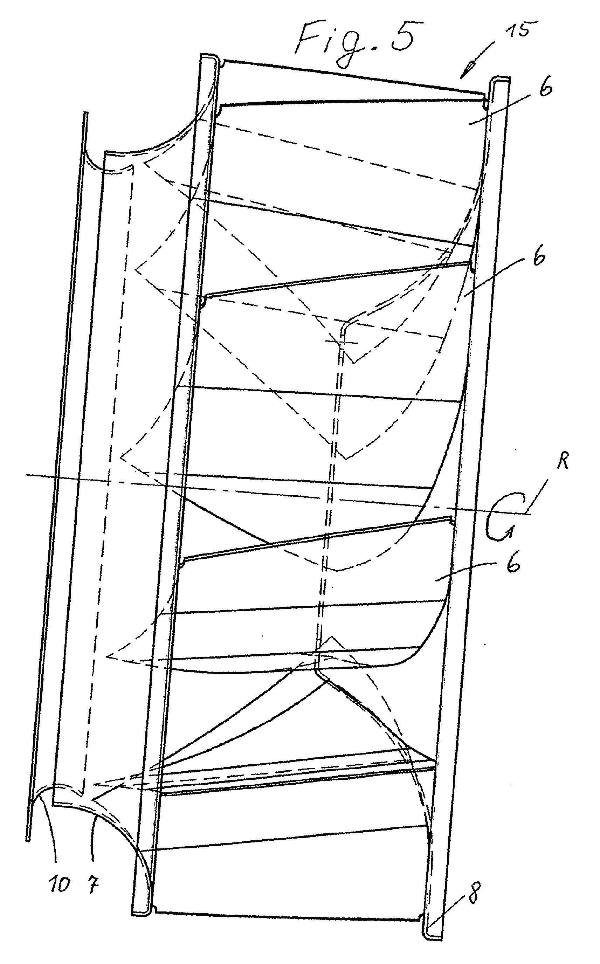

Die Fig. 5 zeigt das Radiallaufrad 15 als Einzelteil. Das Laufrad 15 hat rückwärtsgekrümmte Schaufeln 6, eine Deckscheibe 7 und eine Rückwand 8. Die Drehrichtung um die Rotationsachse 6 wurde durch einen Pfeil angegeben. Es ist zu erkennen, daß die Schaufeln 6 entgegen der Drehrichtung gekrümmt sind.

## Patentansprüche

1. Kühlanlage (1) mit mehreren einzelnen Kühlern (2, 3, 4, 5), die kastenförmig angeordnet sind und die ein Ausblasschaufeln (6), Deckscheibe (7) und Rückwand (8) aufweisendes Laufrad (15) eines Radialventilators (9), innerhalb der kastenförmigen Anordnung besitzt, das Frischluft über eine mit einer Düse (10) versehenen Ansaugöffnung (11) in der Frontwand (12) ansaugt und als Kühlluft durch die Kühler (2, 3, 4, 5,) der kastenförmigen Anordnung hindurchbläst, wobei die Kühlanlage (1) eine Rückwand (13) aufweist, die im Zentrum das Lager (14) des Radialventilators (9) trägt,
**dadurch gekennzeichnet, daß**
die quer zur Rotationsachse (R) verlaufende Mittellinie (ml) der Ausblasschaufeln (6) des Laufrades (15) auf die Düse (10) zu mit einem Abstand (a) vor der quer zur Rotationsachse verlaufenden Mittellinie (ML) der Kühlanlage (1) verläuft, wobei das Verhältnis der Abmessung (I) vom Düseneinlauf bis zur Mitte der Ausblasschaufeln (6), gemessen entlang der Rotationsachse (R), zum Durchmesser (d) des Laufrades (15) zwischen 0,20 und 0,36 beträgt.

2. Kühlanlage nach Anspruch 1, **dadurch gekennzeichnet, daß** das Verhältnis zwischen 0,25 und 0,32 liegt.

3. Kühlanlage nach Anspruch 1 oder 2, **dadurch gekennzeichnet, daß** das Laufrad (15) freiausblasend ist und entgegen der Drehrichtung gekrümmte Schaufeln (6) aufweist.

4. Kühlanlage nach Anspruch 1, **dadurch gekennzeichnet, daß** die Rückwand (13) vom Zentrum ausgehende Streben (25) aufweist, die zu in den Ecken der Kühlanlage (1) angeordneten Knotenblechen (16 - 19) gehen,
daß zwischen den Streben (25) Abdeckungen angeordnet sind,
daß in mindestens zwei Knotenblechen (16 - 19) mindestens je eine Öffnung (20) zum Durchführen eines zu kühlenden Mediums durch mindestens einen Kühler (3, 4 oder 5) angeordnet ist
und daß Strömungskanäle (21) vorgesehen sind, die mit den Öffnungen (20) kommunizieren, an denen sich der Ein-und Austritt (22, 23) für das zu kühlende Medium befindet, wobei die Strömungskanäle (21) vorzugsweise direkt an der Rückwand (13) befestigt sind.

5. Kühlanlage nach Anspruch 4, **dadurch gekennzeichnet, daß** die Kühler (3, 4, 5) zur Kühlung einer einzigen Kühlflüssigkeit dienen die ein-und ausgangsseitig mittels der Strömungskanäle (21) über die Öffnungen (20) in den Knotenblechen (16 - 19) verbunden sind, wobei die einen Knotenbleche (16 und 17) je eine Öffnung (20) für den Eingang in die Kühler (3 und 5) und die anderen Knotenbleche (18 und 19) je zwei Öffnungen (20) aufweisen, wovon eine Öffnung (20) dem Ausgang aus dem einen Kühler (3 bzw. 5) dient und die andere Öffnung (20) den Eingang bzw. den Ausgang des anderen Kühlers (4) darstellt.

6. Kühlanlage nach den Anspruch 4, **dadurch gekennzeichnet, daß** die Kühler (3 bis 5) zur Kühlung verschiedener Medien, beispielsweise Öl, Kühlflüssigkeit und Kältemittel vorgesehen sind und die Strömungskanäle (21) sowie die Öffnungen (20) daran angepaßt ausgebildet sind.

7. Kühlanlage nach den Ansprüchen 1, 4, 5,oder 6, **dadurch gekennzeichnet, daß** die Rückwand (13) zum Zentrum hin in das Innere der kastenförmigen Kühleranordnung eingezogen ist und im Zentrum das Lager (14) des Radialventilators (9) an einer Adapterplatte (24) befestigt ist, die an den zu den Knotenblechen (16 - 19) führenden Streben (25) angeschlossen ist.

8. Kühlanlage nach Anspruch 1, 4, 5 oder 6, **dadurch gekennzeichnet, daß** die Rückwand (13) einen etwa ebenen Abschluß der Kühlanlage (1) bildet.

## Claims

1. Cooling system (1) with a plurality of individual coolers (2, 3, 4, 5) which are arranged in a box-shaped manner and possessing within the box-shaped arrangement, an impeller (15), having blow-out blades (6), a cover disc (7) and a rear wall (8), of a radial fan (9) which sucks in fresh air via a suction-intake port (11) provided with a nozzle (10) and located in the front wall (12) and blows the said fresh air as cooling air through the coolers (2, 3, 4, 5) of the box-shaped arrangement, the cooling system (1) having a rear wall (13) which at the centre carries the bearing (14) of the radial fan (9), **characterized in that** the centre line (ml), running transversely with respect to the axis of rotation (R), of the blow-out blades (6) of the impeller (15) runs towards the nozzle (10) at a distance (a) in front of the centre line (ML), running transversely with respect to the axis of rotation, of the cooling system (1), the ratio of the dimension (1) from the nozzle entry to the middle of the blow-out blades (6), as measured along the axis of rotation (R), to the diameter (d) of the impeller (15) amounting to between 0.20 and 0.36.

2. Cooling system according to Claim 1, **characterized in that** the ratio lies between 0.25 and 0.32.

3. Cooling system according to Claim 1 or 2,
**characterized in that** the impeller (15) blows out freely and has blades (6) curved opposite to the direction of rotation.

4. Cooling system according to Claim 1, **characterized in that** the rear wall (13) has struts (25) which emanate from the centre and extend to gusset plates (16 - 19) arranged in the corners of the cooling system (1), **in that** covers are arranged between the struts (25), **in that** at least one port (20) for leading a medium to be cooled through at least one cooler (3, 4 or 5) is arranged in each case in at least two gusset plates (16 - 19), and **in that** flow ducts (21) are provided, which communicate with the ports (20) at which the inlet and outlet (22, 23) for the medium to be cooled are located, the flow ducts (21) being fastened preferably directly to the rear wall (13).

5. Cooling system according to Claim 4, **characterized in that** the coolers (3, 4, 5) serve for cooling a single cooling liquid and are connected on the inlet and outlet sides by means of the flow ducts (21) via the ports (20) in the gusset plates (16 - 19), the one gusset plates (16 and 17) each having a port (20) for the inlet into the coolers (3 and 5) and the other gusset plates (18 and 19) each having two ports (20), of which one port (20) serves for the outlet from the one cooler (3 or 5) and the other port (20) constitutes the inlet or the outlet of the other cooler (4).

6. Cooling system according to Claim 4, **characterized in that** the coolers (3 to 5) are provided for cooling various media, for example oil, cooling liquid and refrigerant, and the flow ducts (21) and the ports (20) are designed so as to be adapted for this.

7. Cooling system according to Claims 1, 4, 5 or 6, **characterized in that** the rear wall (13) is drawn towards the centre into the interior of the box-shaped cooler arrangement, and the bearing (14) of the radial fan (9) is fastened at the centre to an adaptor plate (24) which is connected to the struts (25) leading to the gusset plates (16 - 19).

8. Cooling system according to Claim 1, 4, 5 or 6, **characterized in that** the rear wall (13) forms an approximately planar termination of the cooling system (1).

## Revendications

1. Installation de refroidissement (1) comprenant plusieurs refroidisseurs individuels (2, 3, 4, 5) qui sont disposés en forme de boîte et qui possède à l'intérieur de l'agencement en forme de boîte, un rotor (15) d'un ventilateur radial (9), présentant des pales de soufflage (6), un disque de recouvrement (7) et une paroi arrière (8), lequel aspire l'air frais par une ouverture d'admission (11) pourvue d'une buse (10) dans la paroi avant (12), et le souffle sous forme d'air de refroidissement à travers les refroidisseurs (2, 3, 4, 5) de l'agencement en forme de boîte, l'installation de refroidissement (1) présentant une paroi arrière (13) qui porte au centre le palier (14) du ventilateur radial (9),
**caractérisée en ce que**
l'axe médian (ml) des pales de soufflage (6) du rotor (15), s'étendant transversalement à l'axe de rotation (R), s'étend vers la buse (10) à une distance (a) avant l'axe médian (ML) de l'installation de refroidissement (1) s'étendant transversalement à l'axe de rotation, le rapport de la dimension (I) de l'entrée de la buse jusqu'au milieu des pales de soufflage (6), mesurée le long de l'axe de rotation (R), au diamètre (d) du rotor (15) étant compris entre 0,20 et 0,36.

2. Installation de refroidissement selon la revendication 1, **caractérisée en ce que** le rapport est compris entre 0,25 et 0,32.

3. Installation de refroidissement selon la revendication 1 ou 2, **caractérisée en ce que** le rotor (15) est à soufflage libre et présente des pales (6) courbées dans le sens opposé à la rotation.

4. Installation de refroidissement selon la revendication 1, **caractérisée en ce que** la paroi arrière (13) présente des renforts (25) partant du centre, qui vont jusque dans les plaques d'éclissage (16-19) disposées dans les coins de l'installation de refroidissement (1),
**en ce qu'**entre les renforts (25) sont disposés des recouvrements,
**en ce que** dans au moins deux plaques d'éclissage (16-19) est prévue au moins une ouverture (20) respective pour le passage d'un fluide à refroidir par au moins un refroidisseur (3, 4 ou 5),
et **en ce que** des canaux d'écoulement (21) sont prévus, lesquels communiquent avec les ouvertures (20) au niveau desquelles se trouvent l'entrée et la sortie (22, 23) pour le fluide à refroidir, les canaux d'écoulement (21) étant de préférence fixés directement sur la paroi arrière (13).

5. Installation de refroidissement selon la revendication 4, **caractérisée en ce que** les refroidisseurs (3, 4, 5) servent à refroidir un fluide de refroidissement unique et sont connectés du côté de l'entrée et de la sortie au moyen des canaux d'écoulement (21) par le biais des ouvertures (20) dans les plaques d'éclissage (16-19), certaines des plaques d'éclissage (16 et 17) présentant chacune une ouverture (20) pour l'entrée dans les refroidisseurs (3 et 5) et les autres plaques d'éclissage (18 et 19) présentant chacune deux ouvertures (20), dont une ouverture (20) sert à la sortie de l'un des refroidisseurs (3 ou 5) et l'autre ouverture (20) constitue l'entrée ou la sortie de l'autre refroidisseur (4).

6. Installation de refroidissement selon la revendication 4, **caractérisée en ce que** les refroidisseurs (3 à 5) sont prévus pour le refroidissement de divers fluides, par exemple de l'huile, du réfrigérant et des fluides frigorigènes, et les canaux d'écoulement (21) ainsi que les ouvertures (20) sont réalisés de manière adaptée à ceux-ci.

7. Installation de refroidissement selon la revendication 1, 4, 5 ou 6, **caractérisée en ce que** la paroi arrière (13) est rentrée vers le centre dans l'intérieur de l'agencement de refroidisseurs en forme de boîte et au centre, le palier (14) du ventilateur radial (9) est fixé à une plaque d'adaptateur (24) qui est raccordée aux renforts (25) conduisant aux plaques d'éclissage (16-19).

8. Installation de refroidissement selon la revendication 1, 4, 5, ou 6, **caractérisée en ce que** la paroi arrière (13) forme une terminaison approximativement plane de l'installation de refroidissement (1).
